**Europäisches Patentamt**

**European Patent Office**

**Office européen des brevets**

(11) Publication number: **0 184 466**
**A2**

(12) # EUROPEAN PATENT APPLICATION

(21) Application number: **85308907.6**

(22) Date of filing: **06.12.85**

(51) Int. Cl.⁴: **B 29 C 67/22**

(30) Priority: **06.12.84 GB 8430801**

(43) Date of publication of application:
**11.06.86 Bulletin 86/24**

(84) Designated Contracting States:
**DE FR GB IT**

(71) Applicant: **FILTAFOAM (LOUDWATER) LIMITED**
**(formerly known as Wallden Limited)**
**Resiliency Works Kingsmead Road**
**Loudwater High Wycombe, Bucks. HP11 1JU(GB)**

(72) Inventor: **Wood, David Neal Thomson**
**30, Squirrel Rise**
**Marlow Bucks. SL7 3PN(GB)**

(74) Representative: **Wilkinson, Stephen John**
**c/o Stevens, Hewlett & Perkins 5 Quality Court Chancery**
**Lane**
**London WC2A 1HZ(GB)**

(54) **Latex foam product.**

(57) A latex foam product may be manufactured by a method comprising applying, onto a carrier sheet, a first layer comprising a layer of a foamed vulcanisable latex composition; applying, onto the first layer, a second layer of a foamed vulcanisable latex composition and then heating the resulting layered product to effect vulcanisation of the foamed vulcanisable latex compositions in the first and second layers.

The method makes it possible to manufacture a two-foam layer product, e.g. cushioning components for footwear, in which the two foam layers are strongly bonded to each other. Because the method involves only one vulcanisation operation, it offers both technical and economic advantages over prior art methods.

Croydon Printing Company Ltd.

## LATEX FOAM PRODUCT

The present invention relates to a method of making a latex foam product. More particularly, it relates to a method of making a product having two layers of latex foam which product is suitable for use in the manufacture of cushioning components for footwear.

The use of resilient foam materials to make cushioning components and accessories for footwear, such as shoe insoles, is well known. Various types of such components or accessories, and methods of making these, are described in GB 1,243,575, GB 1,539,631, GB 1,564,239, GB-A-2014512 and GB-A-2067199.

A recent development in the production of footwear cushioning components is described in West German patent application No. 3306425. This document describes a process wherein a first layer of a latex foam is applied to a textile carrier layer, this first layer is then gelled, embossed and vulcanized after which a second layer of latex foam is spread onto the vulcanized first layer and the second layer is then gelled and vulcanized. The product of this process has the disadvantages that the second foam layer does not bond particularly well to the first layer. Furthermore, because the first latex layer is subjected to two vulcanizing treatments, the first on its own and the second with the second foam layer, conditions must be controlled carefully to ensure that the first foam layer does not become over vulcanized which could adversely affect its physical properties.

The present invention provides a method of making a layered latex foam product which method comprises (1) applying, onto a carrier sheet, such as woven fabric, a first layer comprising a layer of a foamed vulcanisable latex composition; (2) applying, onto the wet first layer, a second layer comprising a layer of a foamed vulcanisable latex composition; and (3) heating the two layers to effect vulcanisation thereof. Unlike the process described in DE-A-3306425, the method of the invention does not require the first latex foam layer to be gelled and vulcanised prior to the application of the second latex foam layer. Because of this, the present method is capable of being carried out faster and more cheaply than the process of DE-A-3306425. In addition, the present method produces a two-layer product in which the two foam latex layers are strongly bonded to each other. Furthermore, since the present method involves only one vulcanisation operation, the problem of the prior art in minimising the risk of over vulcanisation of the first foam layer does not arise.

In carrying out the method of the invention, a first layer comprising a layer of a foamed vulcanisable latex composition is applied onto a carrier sheet. The type of material used as the carrier sheet is not critical and may be formed of any woven, non-woven or knitted fabric or web made from natural or synthetic fibres. Such materials are well known in the art and include, for example, viscose, polyester and cotton. Alternatively, the carrier sheet may be a sheet of release coated paper, for instance, silicone paper, which can be peeled off the vulcanised layered latex foam product prior to use. As a variation on this idea, the first layer can be applied directly onto a continuous belt having a release coating in which case the layered latex foam product would be removed from the belt after vulcanisation of the foam has occurred.

The first layer of foam will typically be spread onto the carrier sheet by means of a gap set blade or roller. The latex foam composition forming the second layer is then applied onto the wet first layer at a second gap set blade or roller. After the second layer has been applied, the two layers are then heated to set or gel the foams and the product then passes into an oven to effect vulcanisation.

The foamed vulcanisable latex composition used to form the first layer and that used to form the second layer will both typically be produced by air frothing the appropriate curable latex composition. By the term "latex" as used herein, we mean an emulsion or dispersion of polymer particles in water. The nature of the polymer in the latex compositions used is not critical provided that it can form stable, vulcanisable latex foam. Examples of suitable polymers include natural rubber, styrene-butadiene rubber, nitrile-rubber and polyacrylics. The latex used to form the vulcanisable foam of the first layer can be the same as or different from the latex used to form the vulcanisable foam of the second layer. Preferably, however, the latex used in the foamed curable latex compositions which form the first and second layers will be natural rubber latex, styrene-butadiene rubber (SBR) latex or blends of these because these materials give the best compromise of ease of processing, cheapness and most suitable properties in the product. Examples of SBR latex which have been used to good effect in the present invention include Enichem Intex 2003, Bayer Baystal 633 and Polysar latex D92-102.

By the terms "vulcanisable latex composition" and "vulcanisable foam", as used herein, we mean latex compositions and foams which are capable of undergoing crosslinking reactions. Certain latex materials may be self cross-linking under conditions of drying and heating for an appropriate time. Other latex materials require reaction with crosslinking agents such as sulphur, sulphur-donor complexes, resins or the presence of catalysts in order to undergo cross-linking.

The term "vulcanisation", as used herein, refers to the production of a durable foam product by crosslinking or by curing the latex by drying and heating, including the use of a crosslinking agent or catalyst, as appropriate to the particular latex material being used.

The foamed vulcanisable latex compositions used to form the first layer and that used to form the second layer may be either "non-gel" systems where the foam produced is stabilised by very efficient foaming and stabilising ingredients or alternatively, a "gel" system where the foam is gelled by the incorporation, at some stage, of a chemical ingredient which reduces the stability of the foam system causing gellification of the foam structure.

Typical and optimum formulations of "non-gel" and "gel" systems are given below by way of example.

## TABLE 1 - Non-Gel Systems

| | % Typical solids content | Typical formulation phr* | %Optimum solids content | Optimum formulation phr* |
|---|---|---|---|---|
| SBR Latex | 55-72 | 100 | 66 | 100 |
| Long chain sulpho-succinamate soap | 28-40 | 2-8 | 35 | 4.5 |
| Sodium hexametaphosphate (Calgon P.T.) | 100 | 0.1-1.0 | 100 | 0.5 |
| Sulphur dispersion | 40-60 | 1.5-3.0 | 50 | 2.5 |
| 2-mercaptobenzthiazole dispersion | 40-60 | 0.25-2.0 | 50 | 0.8 |
| Zinc diethyl dithio-carbamate dispersion | 40-60 | 0.25-2.0 | 50 | 1.0 |
| Zinc Oxide dispersion | 40-60 | 1.5-5.0 | 50 | 2.5 |
| Antioxidant | 33-70 | 0.5-3.0 | 50 | 2.0 |
| Filler | 100 | 0-240 | 100 | 170 |
| Polyacrylate thickener | 12-16 | 0.2-6.0 | 16 | 0.3 |

The total solids of the composition would generally be in the range of from 55 to 80% with a viscosity of 3000 to 20000 centipoises (measured with spindle 5 at 10 rpm on a Brookfield RVF viscometer). Water may be added to the compound to adjust the solids content if required. Total solids of about 75% with a viscosity of 10000 centipoises are typical.

* phr figures are parts by weight dry per hundred parts by weight dry polymer.

## TABLE 2 - Gel Systems

|  | % Typical solids content | Typical formulation phr* | % Optimum solids content | Optimum Formulation phr* |
|---|---|---|---|---|
| SBR Latex | 55-72 | 100 | 66 | 100 |
| Potassium Oleate | 15-20 | 2-6 | 18 | 4.5 |
| Sulphur dispersion | 40-60 | 1.5-3.0 | 50 | 2.5 |
| 2-mercaptobenzthiazole dispersion | 40-60 | 0.25-2.0 | 50 | 0.9 |
| Zinc diethyl dithio-carbamate dispersion | 40-60 | 0.25-2.0 | 50 | 1.0 |
| Zinc Oxide dispersion | 40-60 | 4.0-10.0 | 50 | 5.0 |
| Ammonia (0.880) | 0 | 1.0-4.0 | 0 | 3.0 |
| Antioxidant | 33-70 | 0.5-3.0 | 65 | 2.0 |
| Filler | 100 | 0-140 | 100 | 110 |
| Polyacrylate thickener | 12-16 | 0.2-6.0 | 16 | 0.5 |

The total solids of the composition would generally be in the range of from 55 to 75% with a viscosity of 4000 - 20000 centipoises. Total solids of about 70% and a viscosity of 12000 centipoises would be typical.

In the case of "non-gel" systems, the composition is typically stabilised by the incorporation of a long chain sulpho-succinimate soap as mentioned in Table 1 above. A long chain sulpho-succinimate soap which has been found especially useful in the present invention is Alcopol FA (Allied Colloids).

Both "non-gel" and "gel" systems typically contain an antioxidant, for instance, a styrenated phenol type such as Goodyear Wingstay S.

The filler, if used, will typically be calcium carbonate, e.g. ground limestone, chalk or whiting. However, other filler materials such as clays, talcs, feldspars and alumina trihydrate may be used instead of or in combination with calcium carbonate.

Polyacrylate thickeners are favoured for efficiency and Scott Bader SPA 5 is typical.

The gelling agent which may be added to the "gel" formulated composition is preferably a heat-sensitive gelling agent, such as an ammonium salt, e.g. the acetate, sulphamate, sulphate or chloride. Typically these gelling agents are used in an amount of from 1 to 5 parts per hundred of dry polymer.

Other materials such as stabilizers, e.g. Casein, viscosity modifiers or thickeners, e.g. methyl cellulose or polyacrylates, alternative antioxidants, bactericides, perfumes, colouring pigments may also be included in the latex composition.

It is preferred, in the present invention, that the foamed latex composition used to form the first foam layer is a "non-gel" system. By using such a "non-gel" system, the surface of the first foam layer, prior to the application thereto of the second layer, can be patterned, such as by the use of a patterned or contoured roller or gap set blade. If, for instance, the foam compositions used to form the first and second layers have different colours, the patterning will be a distinctive feature in the final product.

The dry foam density of the first foam layer is typically in the range of from 80 to 180 kg/m$^3$ and the dry foam density of the second foam layer is typically in the range of from 160 to 300 kg/m$^3$. Cushioning components for footwear, especially insoles, may advantageously have foam layers of different density. Therefore, in a preferred embodiment, the present invention provides a method of making a layered latex foam product which method comprises (1) applying, onto a carrier sheet, a first layer comprising a layer of a foamed vulcanisable latex composition; (2) applying, onto the wet first layer, a second layer comprising a layer of a foamed vulcanisable latex composition having a foam density different from the foam density of foamed latex composition which forms the first layer; and (3) heating the two layers to effect vulcanisation thereof.

An example of a case where the first foam layer is formed of a foamed latex composition having a greater density than the foamed latex composition which forms the second layer would be in the production of an insole containing a high concentration of bactericide. In such a case, the bactericide needs to be close to the surface which, in use, is in contact with the foot. In order to support a high bactericide concentration, a high density foam would be required. However, the foam would be relatively thin to minimise the cost and increase the effectiveness of the bactericide.

Another example of such a case would be when the carrier sheet is a relatively unstable fabric, such as a circularly knitted fleece fabric. In such a case, a thin high density first foam layer would assist in stabilising the unstable fabric; the second foam layer being intended as a "comfort" foam.

An example of a case where the foamed latex composition which forms the second foam layer has a density greater than the foamed latex composition which forms the first foam layer would be in the production of an insole having a lower, more resilient, support layer. Such a case is particularly preferred when the foamed latex composition used to form the first foam layer is a non-gel system and when the surface of the first foam layer, prior to the application thereto of the second layer, is patterned, such as by the use of a contoured blade or roller as mentioned above. By such means, it is possible to produce an insole having a greater density lower foam layer with a contoured upper surface (i.e. the interface between the two foam layers). The patterning gives a visually attractive insole which depending on the pattern and the density of the lower foam layer may give greater comfort to the wearer.

After the two foam layers have been applied, the foam system is subjected to the influence of heat to set or gel (if a gelling agent is present) the foams. This is usually achieved by passing the foam system under a high intensity infra red heater. Thereafter, the foam system is passed into an oven, typically at a temperature of about $140^{\circ}C$, to dry and vulcanise the foam.

According to a further embodiment of the invention, the foamed latex composition used to form the second layer contains a gelling agent and, after the second layer has been applied onto the first layer, the foam in the second layer is gelled and then the outer surface of the second layer is embossed before the first and second layers are heated to cause vulcanisation of the latex foams. The advantage of this technique is the feature of a complete in-line single-pass operation whereas such effects are conventionally achieved by two-pass operations. To emboss the surface of the gelled second layer, the layered product may be passed between a pair of rollers; the uppermost of which being patterned and the lower one being a plain pressure roller, the roller faces just touching so as to achieve a good pattern on the surface of the second layer whilst retaining the desired overall thickness of foam. The first layer is minimally effected.

Products of a desired shape, e.g. shoe insoles, may be cut or stamped out of the layered foam after vulcanisation has been effected.

The method of the invention is ideally suited to continuous operation whereby a two layered foam product can be made quickly and cheaply.

Although we have heretofore referred to the application of the present invention in the manufacture of cushioning components for footwear, the invention may have applications in other industries in the manufacture of articles which have a two-layer foam backing. For instance, the duel-layer technique of the present invention may be used in acrylic foam backing curtains where currently a black out coat is applied followed by a white top coat which, conventionally, is manufactured in a two pass operation.

EXAMPLES

EXAMPLE 1

A latex foam insole of two differing densities of latex foam is produced in one continuous operation on a loomstate rayon fabric. In this example two separate foam compositions were used, one composition being coloured to clearly demonstrate there was minimum mixing of the foam densities during the process. The following materials were used:-

Composition A

|  | % solids | phr.* |
|---|---|---|
| SBR latex (Enichem Intex 2003) | 66 | 90 |
| Natural Rubber latex | 61.5 | 10 |
| Potassium Oleate | 18 | 4.5 |
| Sulphur Dispersion | 50 | 2.5 |
| 2-mercaptobenzthiazole dispersion | 50 | 0.9 |
| Zinc diethyl dithiocarbamate dispersion | 50 | 1.0 |
| Zinc Oxide dispersion | 50 | 5.0 |
| Ammonia | 0 | 3.0 |
| Antioxidant dispersion (Goodyear Wingstay S) | 65 | 2.0 |
| China Clay Grade D (dispersion) | 58 | 15 |
| Filler Calcium Carbonate (Snowcal 2ML) | 100 | 100 |
| Polyacrylate thickener (Scott (Bader SPA 5) | 16 | 0.6 |

The compound has a total solids content of 69.7% and a viscosity of 14000 cps (measured with spindle 5 at 10 rpm on a Brookfield RVF viscometer.

* phr figures are parts dry per hundred parts dry polymer.

## Composition B

This was the same as composition A except that 0.2 parts dry of 25% Blue pigment dispersion (I.C.I. Vynamon Blue B Paste) was added per 100 parts of dry polymer.

The total solids of composition B was 69.6% and the viscosity was 14000 centipoises (measured with spindle 5 at 10 rpm on a Brookfield RVF viscometer).

## Fabric

The loomstate rayon fabric having a thickness of about 0.25 mm had a weight of 98 $g/m^2$ , a woven construction of 70 warp ends per inch and 52 weft ends per inch. The yarns used being 30's count in warp and weft.

The latex foam compositions A and B were foamed separately in conventional foaming equipment such as that made by the Oakes Corporation. 20% Ammonium acetate gelation agent was continuously added to both compositions during the foaming operation at a level of 2 parts dry per 100 parts dry polymer.

Composition A was foamed to a wet density of 190 grams per litre and had a cream colour. Composition B was foamed to a wet density of 310 grams per litre and was blue in colour.

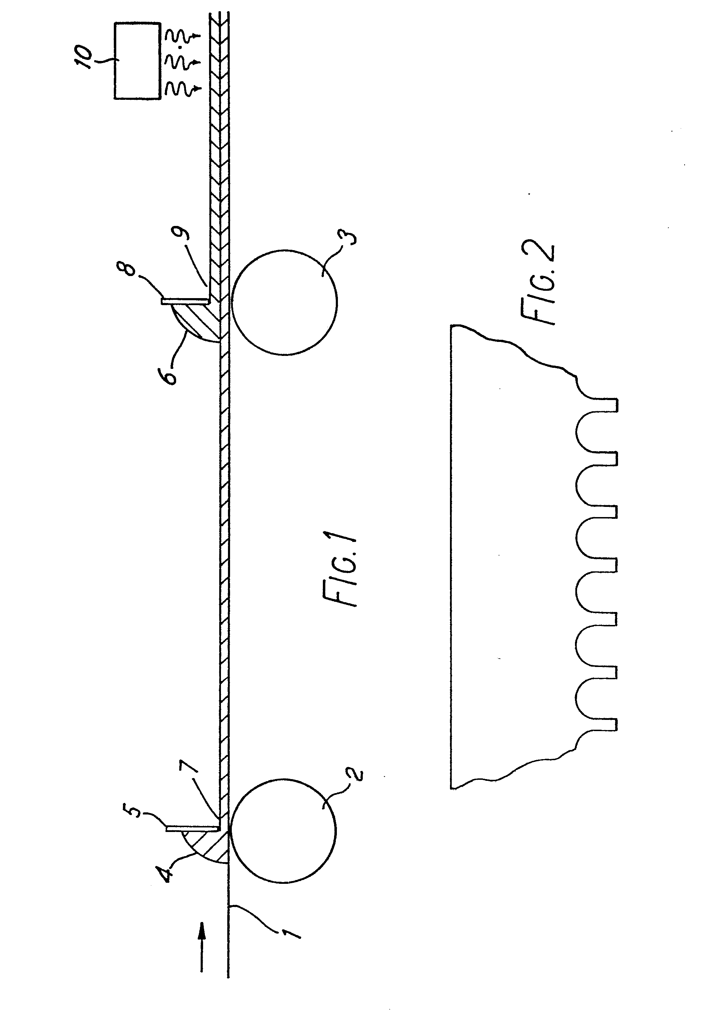

With reference to the apparatus illustrated in Figure.1, a sheet of woven rayon fabric (1) was run over fixed rollers (2) and (3) at a line speed of 10 m/min.

The foam produced by composition A (4) was applied to the surface of the fabric by means of a gap set coating blade (5). The blade 5 was set at a 2.2 mm clearance above fixed roller 2 of the apparatus. The fabric ran over and was held against roller 2. The blue coloured foam 6 produced by composition B was applied onto the surface of the first foam layer (7) by a second gap set coating blade (8). The blade 8, which was set at a distance of 50 cm from blade 5, was set at 4.4 mm above the fixed roller 3. A second foam layer (9) was thus applied on to the first foam layer 7. There was no visible mixing of the two foam layers. The fabric coated with the two layers of latex foam was then passed beneath infra-red heaters (10) to gel the foam system. After gelation, the foams were dried and vulcanised by passing through an oven (not shown) at $140^{\circ}$C with a residence time of about 7 minutes.

The layered foam product had a total weight of 770 g/m$^2$ and an overall thickness of 3.4 mm. The two layers of differing foam densities and differing colours can readily be seen. The coloured layers are well defined yet completely integrated.

Example 2

This example relates to the production of an insole material produced on a loomstate woven rayon fabric in which the first applied foam coating is patterned and then overcoated by a further foam coating in a continuous operation.

The following materials were used:

<u>Composition C</u>

|  | % solids | phr* |
|---|---|---|
| SBR latex (Enichem Intex 2003) | 66 | 100 |
| Sulphosuccinamate soap ** | 35 | 4.5 |
| Soldium hexametaphosphate (Calgon P.T.) | 100 | 0.5 |
| Sulphur dispersion | 50 | 2.5 |
| 2-mercaptobenzthiazole dispersion | 50 | 0.8 |
| Zinc diethyl dithiocarbamate dispersion | 50 | 1.0 |
| Zinc Oxide dispersion | 50 | 2.5 |
| Antioxidant dispersion (Goodyear Wingstay S) | 65 | 2.0 |
| Filler Calcium Carbonate (Snowcal 4ML) | 110 | 110 |
| Polyacrylate thickener (Scott Bader SPA 5) | 16 | 0.5 |

* phr figures are parts dry per hundred parts dry polymer.

** Alcopol FA manufactured by Allied Colloids.

This composition had a total solids of 75.4% and a viscosity of 13000 centipoises (measured with spindle 5 at 10 rpm on a Brookfield RVF viscometer).

Composition D

|  | % solids | phr * |
|---|---|---|
| SBR latex (Enichem Intex 2003) | 66 | 90 |
| Natural Rubber Latex | 61.5 | 10 |
| Potassium Oleate | 18 | 4.5 |
| Sulphur Dispersion | 50 | 2.5 |
| 2-mercaptobenzthiazole dispersion | 50 | 0.9 |
| Zinc diethyl dithiocarbamate dispersion | 50 | 1.0 |
| Zinc Oxide dispersion | 50 | 5.0 |
| Ammonia | 0 | 3.0 |
| Antioxidant dispersion (Goodyear Wingstay S) | 65 | 2.0 |
| China Clay Grade D dispersion | 58 | 15 |
| Filler Calcium Carbonate (Snowcal 2ML) | 100 | 100 |
| Polyacrylate thickener (Scott Bader SPA 5) | 16 | 0.6 |
| 25% Green pigment dispersion (I.C.I. Monastral Green GNE HD Paste) | 25 | 0.25 |

* phr figures are parts per hundred dry polymer.

The composition D had a total solids of 69.6% and a viscosity of 14000 cps (measured with spindle 5 at 10 rpm on a Brookfield RVF viscometer).

Fabric

The loomstate rayon fabric had a weight of 98 grams per square metre, a woven construction of 70 warp ends per inch and 52 weft ends per inch. The yarns used being 30's count.

The latex foam compositions C and D were foamed separately in conventional foaming equipment, such as that made by the Oakes Corporation. 20% Ammonium Acetate gelation agent was continuously added to composition D during the foaming operation at a level of 2 parts dry per 100 parts dry polymer. No gelation was added during the foaming operation to composition C. The composition C was foamed to a wet density of 240 grams per litre and had a cream colour. Composition D was foamed to a wet density of 310 grams per litre and had a green colour.

Both foams were applied to the woven rayon fabric on a conventional plant as illustrated in Figure 1 and described in Example 1 using a line speed of 9 metres per minute except that the foam produced from C was applied by means of a gap set contoured blade (Figure 2). The bottom edge of the blade was uniformly shaped and set so the bottom edge was 0.45 mm above the bottom fixed roller (2) of the coating device. The fabric ran over the bottom roller of the coating device. The foam was coated on to the rayon fabric and the contoured blade applied parallel bands of shaped foam which closely followed the pattern of the coating blade. The green foam composition D was then applied by a second plain coating blade which was at a distance of 50 cm. from the first coating blade. This second coating blade was gap set at 4.4 mm above the bottom fixed roller of the device. The foam produced from D was directly coated onto the layer of wet foam produced by the first contoured coating blade. There was no visible mixing of the cream coloured patterned foam and the green coloured foam.

The fabric coated with the two layer of foam then passed underneath infra-red heaters to gel and set the foam systems.    After gelation, the foams were dried by passing through an oven at 140°C. with a residence time of approximately 8 minutes.

The product produced has an overall thickness of 3.4 mm and a total weight of 820 grams per square metre.

The pattern produced by the contoured blade was clearly defined in the product, the coloured layers were well defined yet completely integrated and the top layer of foam had a smooth surface.

The result was an insole of pleasing and intriguing appearance capable of many variants by suitable patterning of the coating blade.


Example 3

The example relates to the production of an embossed foam insole produced on a loomstate polyester rayon fabric of weight 85 grams per square metre and construction 21 warp threads per centimetre and 17 weft threads per centimetre.

The following latex compositions were used.

Composition E - non-gel system.

|  | % solids | PHR* |
|---|---|---|
| SBR Latex (Enichem 2003) | 66 | 100 |
| Sulphosuccinimate soap (Alcopol FA) | 35 | 3.5 |
| Sodium Hexa metaphosphate (Calgon PT) | 100 | 0.35 |
| Polystyrene latex (Polysar 776) | 50 | 4 |
| Sulphur dispersion | 50 | 2.5 |
| 2-mercaptobenzthiazole dispersion | 50 | 0.8 |
| Zinc di-ethyl dithiocarbamate dispersion | 50 | 0.8 |

Composition E - non-gel system.

|  | % solids | PHR* |
|---|---|---|
| Zinc Oxide dispersion | 50 | 2.5 |
| Antioxidant dispersion (Wingstay S) | 65 | 2.0 |
| Filler Calcium Carbonate (Snowcal 2 ML) | 100 | 110 |
| Filler Calcium Carbonate (Snowcal 4 ML) | 100 | 54 |
| Polyacrylate thickener (SPA 5) | 16 | 0.4 |

This compound had a viscosity of 12800 centipoises measured with spindle 5 at 10 rpm on a Brookfield RVF Viscometer.

* phr figures are parts per hundred dry polymer.

Composition F - gel system.

|  | % solids | PHR* |
|---|---|---|
| SBR Latex (Enichem 2003) | 66 | 50 |
| Natural latex (High Ammonia type) | 61.5 | 50 |
| Potassium Oleate | 18 | 2.9 |
| Sulphur dispersion | 50 | 2.5 |
| 2-mercaptobenzthiazole dispersion | 50 | 0.75 |
| Zinc diethyl dithiocarbamate dispersion | 50 | 0.8 |
| Zinc oxide dispersion | 50 | 5.0 |
| Ammonia | 0 | 0.6 |
| Antioxidant dispersion (Wingstay L) | 40 | 0.75 |
| China Clay dispersion | 58 | 31.5 |
| Polyacrylate thickener (SPA 5) | 16 | 0.6 |

* phr figures are parts per hundred dry polymer

The compound had a viscosity of 8600 centipoises measured with spindle 5 at 10 rpm with a Brookfield RVF Viscometer.

The latex foam compositions E and F were foamed separately in conventional foaming equipment.  20% Ammonium acetate gelation agent was continuously added to composition F during the foaming operation at a level of 2 parts per 100 parts dry polymer.

The composition E was foamed to a wet density of 220 grams per litre and had a cream colour.

Composition F was foamed to a wet density of 200 grams per litre and also had a cream colour.

Both foams were applied to the polyester rayon fabric on a conventional plant as illustrated in Figure 1 using a line speed of 8.5 metres per minute.

The foam produced by composition E(4) was applied to the surface of the fabric by means of a gap set coating blade (5).  The blade 5 was set at 2.5 mm clearance above fixed roller 2 of the apparatus.

The foam produced by composition F (6) was applied onto the surface of the first foam layer (7) by a second gap set coating blade (8).  The blade 8, which was set at a distance of 50 cm. from blade 5 was set 5.3 mm above the fixed roller 3.

A second foam layer (9) was thus applied to the first foam layer 7.

The fabric coated with the two layers of latex foam was then passed beneath infra-red heaters (10) to gel the foam system. After gelation the foams were dried for 1½ minutes at 140°C. passing through an oven and then passed through embossing rollers set with roller faces just touching. The foams were then fully vulcanised by passing through an oven at 140°C. with a residence time of about 7.5 minutes.

The embossed foam product had a total weight of 610 grams per square metre and an overall thickness of 3.4 mm.

The top surface had a patterned effect and the initial thickness of the first foam layer was retained.

0184466

## CLAIMS

1. A method of making a layered vulcanised latex foam product comprising applying, onto a carrier sheet, a first layer comprising a layer of a foamed vulcanisable latex composition; applying, onto the first layer, a second layer comprising a layer of a foamed vulcanisable latex composition; heating the resulting layered product to effect vulcanisation of the foamed vulcanisable latex compositions in the first and second layers and, optionally, cutting or stamping out desired shapes from the layered vulcanised latex foam characterized in that the second layer is applied onto the first layer without the first layer having previously been subjected to vulcanising conditions.

2. A method according to claim 1, wherein the latex used to form the foamed vulcanisable latex composition of the first layer and the latex used to form the foamed vulcanisable latex composition of the second layer are the same or different and are selected from natural rubber latex,styrene-butadiene rubber latex and blends of these.

3. A method according to either claim 1 or claim 2, wherein the foamed vulcanisable latex composition used to form the first layer and/or the foamed vulcanisable latex composition used to form the second layer contains a gelling agent.

4. A method according to either claim 1 or claim 2, wherein the foamed latex composition used to form the first layer is a non-gel system and wherein the first layer is provided with a patterned surface before the second layer is' applied.

5. A method according to claim 4, wherein the surface of the first layer is contoured into a series of ridges before the second layer is applied.

6.      A method according to any one of claims 1 to 5, wherein the foamed vulcanisable latex composition used to form the second layer has a foam density different from the foam density of the foamed vulcanisable latex composition used to form the first layer.

7.      A method according to claim 6, wherein the foamed vulcanisable latex composition used to form the second layer has a greater foam density than the foamed vulcanisable latex composition used to form the first layer.

8.      A method according to claim 1, wherein the foamed vulcanisable latex composition used to form the second layer contains a gelling agent and wherein, after the second layer has been applied onto the first layer, the foamed latex composition forming the second layer is gelled and the outer surface of the second layer is provided with an embossed pattern prior to heating the first and second layers to effect vulcanisation thereof.

9.      A method according to any one of claims 1 to 8, wherein the carrier sheet is a sheet of release paper or of a woven, non-woven or knitted fabric or web.

10.     A method according to any one of claims 1 to 8, wherein the carrier sheet is a continuous belt coated with a release agent and the first layer is applied directly onto the coated belt and wherein the layered latex foam product is removed from the belt after vulcanisation of the foam has occurred.

11.     A layered material comprising a carrier sheet, a first layer in contact with the carrier sheet consisting of a layer of a foamed vulcanisable latex composition, and a second layer in contact with the first layer consisting of a layer of a foamed vulcanisable latex composition.

12.       A layered material according to claim 11, wherein the latex used to form the foamed vulcanisable latex composition of the first layer and the latex used to form the foamed vulcanisable latex composition of the second layer are the same or different and are selected from natural rubber latex, styrene-butadiene rubber latex and blends of these.

13.       A layered material according to either claim 11 or claim 12, wherein the foamed vulcanisable latex composition of the first layer and/or the foamed vulcanisable latex composition of the second layer contains a gelling agent.

14.       A layered material according to either claim 11 or claim 12, wherein the foamed vulcanisable latex composition of the first layer is a non-gel system and wherein the interface between the first layer and the second layer is in the form of a series of alternate ridges and valleys.

15.       A layered material according to any one of claims 11 to 14, wherein the foamed vulcanisable latex composition of the first layer has a foam density different from the foam density of the foamed vulcanisable latex composition of the second layer.

16.       A layered material according to claim 15, wherein the foamed vulcanisable latex composition used to form the second layer has a greater foam density than the foamed vulcanisable latex composition used to form the first layer.

17.       A layered material according to claim 11, wherein the foamed vulcanisable latex composition of the second layer contains a gelling agent and wherein the outer surface of the second layer has a pattern embossed thereon.

18.      A layered material according to any one of claims 11 to 17, wherein the carrier sheet is a sheet of a release paper or of a woven, non-woven or knitted fabric or web.

19.      A latex foam product obtainable by subjecting the layered material of any one of claims 11 to 18 to vulcanising conditions and, optionally, cutting or stamping out, from the resulting vulcanised material, a product having a desired shape.

FIG.1

FIG.2

0184466